# EUROPÄISCHE PATENTSCHRIFT

(11) **EP 1 495 976 B1**
(45) Veröffentlichungstag und Bekanntmachung des Hinweises auf die Patenterteilung: **09.08.2006**
(21) Anmeldenummer: 04015020.3
(22) Anmeldetag: 25.06.2004
(51) Int. Cl.: B65B 51/30, B29C 65/18, B65B 65/02

(54) **Vorrichtung zum Verschweissen eines Folienschlauches**
Apparatus for welding a blown tubular film
Dispositif pour souder un film tubulaire soufflé

(30) Priorität: 11.07.2003 DE 10331362
(43) Veröffentlichungstag der Anmeldung: 12.01.2005
(73) Patentinhaber: ROVEMA VERPACKUNGSMASCHINEN GMBH, 35463 Fernwald (DE)
(72) Erfinder: Kammler, Roman, Dr., 67547 Worms (DE); Baur, Walter, Dr., 63584 Gründau (DE)

(56) Entgegenhaltungen:
- EP-A- 0 764 584
- EP-A- 1 001 186

## Beschreibung

Die Erfindung betrifft eine Vorrichtung zum Verschweißen eines Folienschlauches zu Verpackungszwecken.

Es sind vertikale Schlauchbeutelmaschinen bekannt, mit denen kopf- und bodenseitig verschweißte, befüllte Schlauchbeutel hergestellt werden. Dazu wird ein Folienschlauch zunächst längs verschweißt. Dann erfolgt eine Befüllung des Folienschlauches, seine Verschweißung quer zu seiner Transportrichtung und ein Abtrennen eines fertiggestellten Schlauchbeutels vom Folienschlauch.

Es sind, wie zum Beispiel aus DE 19627892 A1, unterschiedlichste Antriebe und Getriebe zum Betreiben der Schweißbacken bekannt, welche die Querverschweißung des Folienschlauches ausführen, um die Kopfund Bodennähte der Schlauchbeutel zu erzeugen.

Aus der EP-A-1,001,186 ist eine Vorrichtung gemäß dem Oberbegriff des Anspruchs 1 bekannt, die für diese Querverschweißung geeignet ist.

Bei dieser bekannten Vorrichtung wird der Folienschlauch mittels zweier gegeneinander bewegbaren, den Folienschlauch zwischen sich einklemmenden Schweißbacken verschweißt, jeweils ein Backenhalter dient dabei zum Halten einer Schweißbacke und jeweils ein Backenträger zum Tragen eines Backenhalters und damit einer Schweißbacke. Als Antrieb ist ein Linearantrieb mit einem entlang einer Wirklinie linear beweglichen Teil vorgesehen. Mit dem beweglichen Teil ist ein Getriebe verbunden, wobei das Getriebe auch mit den Backenträgern verbunden ist, um eine gegenläufige Bewegung der Backenträger und damit der Schweißbacken zu erzeugen, um die Schweißbacken aufeinander zu und voneinander weg bewegen zu können. Dabei ist jeweils ein Gelenk an den Backenträgem vorgesehen, um Stangen des Getriebes schwenkbar mit den Backenträgern zu verbinden.

Es ist Aufgabe der vorliegenden Erfindung, die bekannte Vorrichtung zu verbessern.

Gelöst ist die Aufgabe gemäß dem kennzeichnenden Teil des Anspruchs 1. Danach sind die Stangen gegenkürzere oder längere Stangen austauschbar.

Die erfindungsgemäße Vorrichtung hat den Vorteil, dass sie sehr einfach und damit sehr kostengünstig ist. Prinzipiell sind lediglich zwei Stangen nötig, die beide am beweglichen Teil angelenkt werden. Zudem wird jeweils eine Stange gelenkig mit einem der Backenträger verbunden. Derart erfolgt bei einer Linearbewegung des Teils eine Bewegung der Backenträger aufeinander zu oder voneinander weg. Durch ein Hin- und Herbewegen des beweglichen Teils wird somit ein Schließen und ein Öffnen der Schweißbacken und folglich ein Querschweißvorgang erzeugt.

Vorteilhafte Ausgestaltungen der vorgeschlagenen Vorrichtung sind in den Ansprüchen 2 bis 10 beschrieben.

Ist die Wirklinie des Linearantriebes eine Halbierende des Abstandes zwischen den Gelenken (Anspruch 2), so ist eine besonders schnelle Backenbewegung erreichbar. Unterschiedliche Öffnungsweiten können dabei in einfacher Weise durch eine Begrenzung der Bewegungstrecke des beweglichen Teils eingestellt werden.

Eine weitere Vereinfachung des Getriebes ist erreicht, wenn analog Anspruch 3 die Stangen des Getriebes einen symmetrischen Aufbau mit der Wirklinie als Symmetrieachse aufweisen. Dann werden nur Stangen eines Typs benötigt. Darüber hinaus treffen die Schweißbacken mittig am Folienschlauchdurchmesser auf, wenn die Stangen gleich lang sind (Anspruch 4) und zuvor jeweils einen gleichen Abstand zu dieser Mittellinie hatten, was zu geringen tangentialen Zugkräften am Folienschlauch führt und damit zu einem guten Schweißergebnis.

Sind die Stangen unterschiedlich lang (Anspruch 5), so erfahren die Schweißbacken eine unterschiedliche Schließgeschwindigkeit. Sie treffen deshalb nicht an der Mitte des Folienschlauches, sondern etwas davon entfernt aufeinander. Eine derartige Schließstellung ist bei einzelnen Verpackungsoptionen von Vorteil, z. B. um einen Freiraum für ein dort wirkendes Aggregat zu schaffen.

Beliebige Bahnkurven werden erreicht, wenn eine Steuereinrichtung vorgesehen ist, um die Bewegung des beweglichen Teils zeitabhängig zu steuern (Anspruch 6). Als Bahnkurve ist hierbei in einem Ort-Zeit-Diagramm die Bewegung einer Schweißbacke zu verstehen. Derart können z. B. der Schweißvorgang verlängert und die Backenöffnungsweite reduziert werden, um eine sichere und relativ schnelle Beutelherstellung zu erreichen.

Ist gemäß Anspruch 7 der Linearantrieb als Linearmotor, welcher nach einem Schwebebahnprinzip funktioniert, ausgestaltet, so sind sehr schnelle und ortsgenau ansteuerbare Backenbewegungen erreichbar. Dieser elektromagnetische Linearantrieb hat zudem den Vorteil, dass ein relativ hoher Siegeldruck von ca. 5 bis 8 kN erreicht wird. Eine genaue Druckeinstellung ist dabei durch eine Begrenzung der Leistungsaufnahme des Linearmotors möglich.

Die Wirklinie des beweglichen Teils führt dann zu einer gleichförmigen Backenbewegung, wenn sie quer, exakt um 90 Grad zur Bewegungsrichtung der Schweißbacken verläuft (Anspruch 8) und zudem das Getriebe symmetrisch zu dieser Wirklinie ist (Anspruch 3).

Sind gemäß Anspruch 9 beide Stangen über ein gemeinsames Gelenk mit dem beweglichen Teil verbunden, so werden die Stangen in identischer Weise mit einer Schubkraft versehen. Es könnte aber auch jede Stange über ein separates Gelenk mit dem beweglichen Teil verbunden sein (Anspruch 10). Bei gleichartiger Gelenkanordnung wäre dann der gleicher Vorteil bezüglich der Schubkraft erreicht.

Im folgenden wird die Erfindung an Hand zwei Ausführungsbeispiele darstellender Figuren näher beschrieben. Es zeigt:
- Figur 1: in einer Ansicht von oben eine Vorrichtung zum Verschweißen eines Folienschlauches, bei der ein Linearmotor mit einem zwei gleich lange Stangen aufweisendem Getriebe dazu genutzt wird, Schweißbacken gegen den Folienschlauch zu bewegen, um diesen quer zu seiner Transportrichtung zu verschweißen, sowie
- Figur 2: in einer Ansicht von oben eine Vorrichtung wie in Figur 1, jedoch mit unterschiedlich langen Stangen.

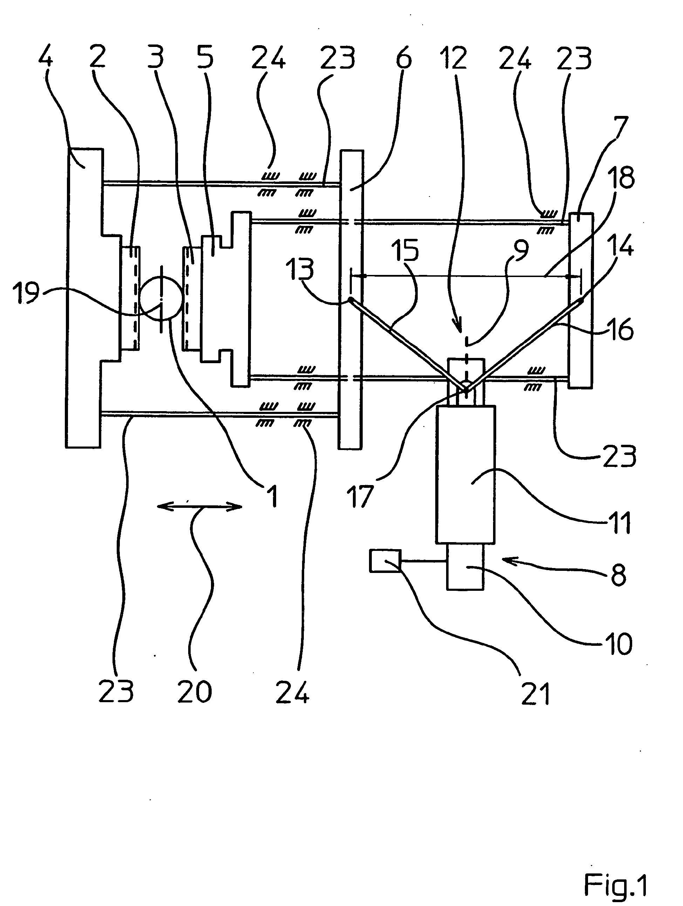

Bei einer Vorrichtung zum Verschweißen eines Folienschlauches 1 dienen zwei gegeneinander bewegbare, den Folienschlauch 1 zwischen sich einklemmende Schweißbacken 2, 3 zu dessen Querverschweißung (Figur 1). Jeweils ein Backenhalter 4, 5 ist zum Halten einer Schweißbacke 2, 3 und jeweils ein Backenträger 6, 7 mitsamt einer starren Verbindung 23 zum Tragen der Backenhalter 6, 7 und damit der Schweißbacken 2, 3 vorgesehen. Ein Linearantrieb 8 mit einem entlang einer Wirklinie 9 auf einem ortsfesten Teil 10 linear beweglichen Teil 11 dient als Backenantrieb. Mit dem beweglichen Teil 11 ist ein Getriebe 12 verbunden. Das Getriebe 12 ist auch mit den Backenträgern 6, 7 verbunden, um eine gegenläufige Bewegung der Backenträger 6, 7 und damit der Schweißbacken 2, 3 zu erzeugen, und um die Schweißbacken 2, 3 aufeinander zu und voneinander weg bewegen zu können. An jeweils einem Gelenk 13, 14 an den Backenträgem 6, 7 ist eine von zwei Stangen 15, 16 des Getriebes 12 schwenkbar mit den Backenträgern 6, 7 verbunden. Zudem sind die Stangen 15, 16 über ein am beweglichen Teil 11 vorgesehenes Gelenk 17 mit dem beweglichen Teil 11 verbunden.

Die Wirklinie 9 des Linearantriebes 8 ist eine Halbierende des Abstandes 18 zwischen den Gelenken 13, 14. Zudem weisen die Stangen 15, 16 des Getriebes 12 einen symmetrischen Aufbau mit der Wirklinie 9 als Symmetrieachse auf, und die Stangen 15, 16 sind gleich lang, so dass der Linearantrieb 8 die Schweißbacken 2, 3 gleichförmig bis zu einer Schließlinie 19 schließt.

Der Linearantrieb 8, ist als Linearmotor, welcher nach einem Schwebebahnprinzip funktioniert, ausgestaltet, und erlaubt eine ortsgenaue Backenbewegung. Diese verläuft äquidistant zur Schließlinie 19, da die Wirklinie 9 des beweglichen Teils 11 in einem 90 Grad-Winkel zur Bewegungsrichtung 20 der Schweißbacken 2, 3 verläuft, und die beiden gleich langen Stangen 15, 16 über ein gemeinsames Gelenk 17 mit dem beweglichen Teil 11 verbunden sind.

Linearantrieb 8 und Getriebe 12 sind sehr einfach aufgebaut und können in einfacher Weise durch Montage leicht verändert werden, z. B. durch Einsatz längerer oder kürzerer Stangen 15, 16 bei anderen Ortskoordinaten für das bewegliche Teil 11. Zum Vorgeben dieser zeitabhängigen Ortskoordinaten ist eine Steuereinrichtung 21 vorgesehen, welche die Bewegung des beweglichen Teils 11 zeitabhängig steuert.

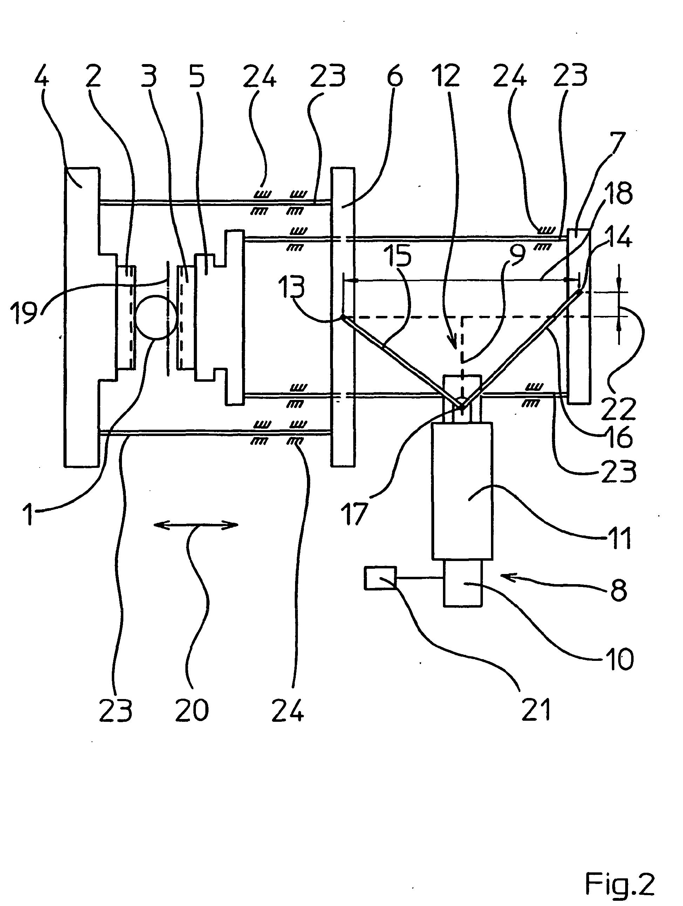

Beim Ausführungsbeispiel der Figur 2 sind die Stangen 15, 16 unterschiedlich lang und die Gelenke 13, 14 sind um einen Abstand 22 in Richtung der Wirklinie 9 zueinander versetzt. Dies führt dazu, dass die Schweißbacken 2, 3 an einer zur Schweißbacke 3 hin parallel versetzten Schließlinie 19 aufeinander treffen, um eine Querverschweißung eines unsymmetrischen Beuteltyps zu erreichen. Die starren Verbindungen 23 gleiten wie beim ersten Ausführungsbeispiel in ortsfesten Führungen 24.
- 1: Folienschlauch
- 2, 3: Schweißbacke
- 4, 5: Backenhalter
- 6, 7: Backenträger
- 8: Linearantrieb
- 9: Wirklinie
- 10: ortsfestes Teil
- 11: bewegliches Teil
- 12: Getriebe
- 13, 14: Gelenk
- 15, 16: Stange
- 17: Gelenk
- 18: Abstand
- 19: Schließlinie
- 20: Bewegungsrichtung
- 21: Steuereinrichtung
- 22: Abstand
- 23: starre Verbindung
- 24: Führung

## Patentansprüche

1. Vorrichtung zum Verschweißen eines Folienschlauches (1), mit zwei gegeneinander bewegbaren, den Folienschlauch (1) zwischen sich einklemmenden Schweißbacken (2, 3), zwei Backenhaltem (4, 5) zum Halten jeweils einer Schweißbacke (2, 3), jeweils einen Backenträger (6, 7) zum Tragen der Backenhalter (4, 5) und damit der Schweißbacken (2, 3), einem Linearantrieb (8) mit einem entlang einer Wirklinie (9) linear beweglichen Teil (11), einem mit dem beweglichen Teil (11) verbundenen Getriebe (12), wobei das Getriebe (12) mit den Backenträgern (6, 7) verbunden ist, um eine gegenläufige Bewegung der Backenträger (6, 7) und damit der Schweißbacken (2, 3) zu erzeugen, und um die Schweißbacken (2, 3) aufeinander zu und voneinander weg bewegen zu können, und mit jeweils einem Gelenk (13, 14) an den Backenträgern (6, 7), um Stangen (15, 16) des Getriebes (12) schwenkbar mit den Backenträgern (6, 7) zu verbinden, wobei zwei Stangen (15, 16) vorgesehen sind, jede Stange (15, 16) einerseits über ein am beweglichen Teil (11) vorgesehenes Gelenk (17) mit dem quer zur Bewegungsrichtung (20) der Schweißbacken (2, 3) beweglichen Teil (11) verbunden ist, und jede Stange (15, 16) andererseits mit einem Gelenk (13, 14) eines Backenträgers (6, 7) verbunden ist, **dadurch gekennzeichnet, dass** die Stangen (15, 16) gegen kürzere oder längere Stangen (15, 16) austauschbar sind.

2. Vorrichtung nach Anspruch 1, **dadurch gekennzeichnet, dass** die Wirklinie (9) des Linearantriebes (8) eine Halbierende des Abstandes (18) zwischen den Gelenken (13, 14) ist.

3. Vorrichtung nach Anspruch 1 oder Anspruch 2, **dadurch gekennzeichnet, dass** die Stangen (15, 16) des Getriebes (12) einen symmetrischen Aufbau zur Wirklinie (9) als Symmetrieachse aufweisen.

4. Vorrichtung nach Anspruch 1, Anspruch 2 oder Anspruch 3, **dadurch gekennzeichnet, dass** die Stangen (15, 16) gleich lang sind.

5. Vorrichtung nach Anspruch 1 oder Anspruch 2, **dadurch gekennzeichnet, dass** die Stangen (15, 16) unterschiedlich lang sind.

6. Vorrichtung nach einem der Ansprüche 1 bis 5, **dadurch gekennzeichnet, dass** eine Steuereinrichtung (21) vorgesehen ist, um die Bewegung des beweglichen Teils (11) zeitabhängig zu steuern.

7. Vorrichtung nach einem der Ansprüche 1 bis 6, **dadurch gekennzeichnet, dass** der Linearantrieb (8) als Linearmotor, welcher nach einem Schwebebahnprinzip funktioniert, ausgestaltet ist.

8. Vorrichtung nach einem der Ansprüche 1 bis 7, **dadurch gekennzeichnet, dass** die Wirklinie (9) des beweglichen Teils (11) in einem Winkel (von 90 Grad) zur Bewegungsrichtung (20) der Schweißbacken (2, 3) verläuft.

9. Vorrichtung nach einem der Ansprüche 1 bis 8, **dadurch gekennzeichnet, dass** beide Stangen (15, 16) über ein gemeinsames Gelenk (17) mit dem beweglichen Teil (11) verbunden sind.

10. Vorrichtung nach einem der Ansprüche 1 bis 8, **dadurch gekennzeichnet, dass** jede Stange über ein separates Gelenk mit dem beweglichen Teil verbunden ist.

## Claims

1. An apparatus for welding a foil tube (1), comprising two welding jaws (2, 3), movable towards one another and clamping the foil tube (1) between them, two jaw holders (4, 5) each for holding a welding jaw (2, 3), respective jaw supports (6, 7) for supporting the jaw holders (4, 5) and thus the welding jaws (2, 3), a linear drive (8) comprising a part (11) movable linearly along an active line (9), a mechanism (12) connected to the movable part (11), the mechanism (12) being connected to the jaw supports (6, 7) in order to produce an opposing movement of the jaw supports (6, 7) and thus of the welding jaws (2, 3), and in order to be able to move the welding jaws (2, 3) towards one another and away from one another, and a joint (13, 14) on each of the jaw supports (6, 7), in order pivotally to connect rods (15, 16) of the mechanism (12) to the jaw supports (6, 7), two rods (15, 16) being provided, each rod (15, 16) being connected, on the one hand, via a joint (17) provided on the movable part (11) to the part (11) which is movable transversely to the direction of movement (20) of the welding jaws (2, 3), and each rod (15, 16) being connected, on the other hand, to a joint (13, 14) of a jaw support (6, 7), **characterised in that** the rods (15, 16) are exchangeable for shorter or longer rods (15, 16).

2. An apparatus according to Claim 1, **characterised in that** the active line (9) of the linear drive (5) is a bisector of the distance (18) between the joints (13, 14).

3. An apparatus according to Claim 1 or Claim 2, **characterised in that** the rods (15, 16) of the mechanism (12) have a symmetrical construction with respect to the active line (9) as the axis of symmetry.

4. An apparatus according to Claim 1, Claim 2 or Claim 3, **characterised in that** the rods (15, 16) are of equal length.

5. An apparatus according to Claim 1 or Claim 2, **characterised in that** the rods (15, 16) are of different lengths.

6. An apparatus according to one of Claims 1 to 5, **characterised in that** a control device (21) is provided in order to control the movement of the movable part (11) time-dependently.

7. An apparatus according to one of Claims 1 to 6, **characterised in that** the linear drive (8) is in the form of a linear motor which operates according to a suspension railway principle.

8. An apparatus according to one of Claims 1 to 7, **characterised in that** the active line (9) of the movable part (11) extends at an angle (of 90 degrees) to the direction of movement (20) of the welding jaws (2, 3).

9. An apparatus according to one of Claims 1 to 8, **characterised in that** both rods (15, 16) are connected to the movable part (11) via a common joint (17).

10. An apparatus according to one of Claims 1 to 8, **characterised in that** each rod is connected to the movable part via a separate joint.

## Revendications

1. Dispositif pour souder un tube de film (1) avec deux mâchoires de soudure (2, 3) mobiles l'une par rapport à l'autre et serrant entre elles le tube de film (1), deux supports de mâchoire (4, 5) supportant chacun une mâchoire (2, 3), une monture de mâchoire (6,7) respective pour supporter les supports de mâchoire (4, 5) et ainsi les mâchoires (2, 3), une entraînement linéaire (8) avec une pièce (11) mobile le long d'une ligne d'action (9), une transmission (12) reliée à la pièce mobile (11), la transmission (12)étant reliée aux montures de mâchoire (6,7) afin de créer un mouvement contraire des supports de mâchoire (4, 5) et par conséquent des mâchoires de soudure (2, 3) et pour pouvoir rapprocher ou éloigner les mâchoires de soudure (2, 3) l'une de l'autre et avec chaque fois une articulation (13, 14) sur les montures de mâchoire (6, 7) afin de relier, de manière à basculer, des barres (15, 16) de la transmission (12) aux montures de mâchoire (6, 7), deux barres (15, 16) étant prévues, chaque barre (15, 16) étant reliée d'une part à la pièce (11) mobile transversalement au sens du mouvement (20) des mâchoires de soudure (2, 3) au moyen d'une articulation (17) prévue sur ladite pièce mobile (11) et chaque barre (15, 16) étant d'autre part reliée à une articulation (13, 14) d'une montures de mâchoire (6, 7), **caractérisé en ce que** les barres (15, 16) peuvent être remplacées par des barres (15, 16) plus courtes ou plus longues.

2. Dispositif selon la revendication 1, **caractérisé en ce que** la ligne d'action (9) de l'entraînement linéaire (8) est une médiatrice de l'intervalle (18) entre les articulations (13, 14).

3. Dispositif selon la revendication 1 ou la revendication 2, **caractérisé en ce que** les barres (15, 16) de la transmission (12)présente une disposition symétrique par rapport à la ligne d'action (9) en tant qu'axe de symétrie.

4. Dispositif selon la revendication 1 ou la revendication 2 ou la revendication 3, **caractérisé en ce que** les barres (15, 16) ont la même longueur.

5. Dispositif selon la revendication 1 ou la revendication 2, **caractérisé en ce que** les barres (15, 16) ont des longueur différentes.

6. Dispositif selon l'une des revendication 1 à 5, **caractérisé en ce qu'**il est prévu un dispositif de commande (21) pour commander en fonction du temps le mouvement de la pièce mobile (11).

7. Dispositif selon l'une des revendication 1 à 6, **caractérisé en ce que** l'entraînement linéaire (8) est réalisé sous la forme d'un moteur linéaire fonctionnant selon un principe de chemin de fer suspendu.

8. Dispositif selon l'une des revendication 1 à 7, **caractérisé en ce que** la ligne d'action (9) de la pièce mobile (11) s'étend dans un angle (de 90°) par rapport à la direction du mouvement des mâchoires de soudure (2, 3).

9. Dispositif selon l'une des revendication 1 à 8, **caractérisé en ce que** chaque barre (15, 16) est reliée à la pièce mobile (11) par l'intermédiaire d'une articulation commune (17).

10. Dispositif selon l'une des revendication 1 à 8, **caractérisé en ce que** chaque barre est reliée à la pièce mobile par l'intermédiaire d'une articulation séparée.
